Europäisches Patentamt

European Patent Office

Office européen des brevets

(19)

(11) Publication number: **0 004 548**
**B1**

(12) **EUROPEAN PATENT SPECIFICATION**

(45) Date of publication of patent specification: **06.04.83**

(51) Int. Cl.³: **G 02 F 1/17**

(21) Application number: **79100542.4**

(22) Date of filing: **23.02.79**

(54) **Electrochromic display device and method of operating the same.**

(30) Priority: **31.03.78 GB 1258578**

(43) Date of publication of application:
**17.10.79 Bulletin 79/21**

(45) Publication of the grant of the patent:
**06.04.83 Bulletin 83/14**

(84) Designated Contracting States:
**DE FR GB**

(56) References cited:
**FR - A - 1 228 105**
**FR - A - 2 366 659**
**US - A - 3 960 438**

(73) Proprietor: **International Business Machines Corporation**
**Armonk, N.Y. 10504 (US)**

(72) Inventor: **Barclay, Donald John**
**1a Broadview Lane**
**Oliver's Battery Winchester Hants (GB)**
Inventor: **Bird, Colin Leonard**
**9 Clifford Place**
**Fair Oak Eastleigh Hants (GB)**
Inventor: **Martin, David Hugh**
**147 Bournemouth Road**
**Chandler's Ford Eastleigh Hants (GB)**
Inventor: **Morgan, William Morris**
**7 Keble Road**
**Chandler's Ford Eastleigh Hants (GB)**

(74) Representative: **Moss, Robert Douglas**
**IBM United Kingdom Patent Operations Hursley Park**
**Winchester, Hants SO21 2JN (GB)**

Courier Press, Leamington Spa, England

Electrochromic display device and method of operating same

This invention relates to an electrochromic display device, which, for the purposes of this specification, is a display which operates by the reversible reduction/oxidation at display electrodes of an electrochromic species, present in solution, so as to cause a colour change of the species. The coloured species may form a deposit on the electrodes and the electrolyte can be colourless or tinted in a colour which contrasts with that of the coloured species.

One class of electrochromic organic substances which have proved of especial interest are the di-alkyl bi-pyridinium compounds known as viologens. The basis of operation of an electrochromic display device using an electrolyte containing viologen, which is colourless and soluble, is the electrochemical and chemical reaction between the viologen dication, $V^{++}$ and an anion $A^-$. Upon reduction of the dication a stable coloured radical cation is formed:

$$V^{++} + e \rightarrow V^{+\cdot}$$

This combines with the anion to precipitate as a relatively insoluble violet coloured deposit on the cathode (display electrode):

$$V^{+\cdot} + A^- \rightarrow V^{+\cdot}A^-$$

The resistance of the deposited film depends on the particular anion employed.

Some of these viologen based systems, together with a large number of anions are described and claimed in British Patent Specification 1376799 (US Patent 3854794) (German Patent 2260048). In a paper by Schoot C J, Ponjee J J et al, 1973 J Applied Physics Volume 23, page 64, the particular electrolyte studied was diheptyl-viologen dibromide (N,N'-diheptyl-4,4'-bipyridinium dibromide). On reduction of the viologen, a violet precipitate is formed with the bromide anion at the display electrode. At the anode a reverse reaction occurs. It has been found that the bromide anion corrodes and discolours the metal surface of the display electrode especially when silver, which is a highly preferred metal, is used and repeated reduction/oxidation cycles result in a non-erasible deposit due to recrystallisation of the radical cation deposit.

In US Patent 3950077 to Raymond J. Jasinski, it is suggested that dihydrogen phosphate ($H_2PO_4^-$) be substituted for the bromide anion. The use of this anion has solved the recrystallisation and corrosion problems but the speed of the reactions at the electrodes is substantially reduced.

In published European Patent Application No. 1912 the use of either or both hypophosphite ($H_2PO_2^-$) and phosphite ($HPO_3^{2-}$) anions is proposed, possibly in combination with bromide anions. The specification of the application indicates that, mixed with dihydrogen phosphate anions, phosphite or hypophosphite anions lead to substantial improvements in the speeds of the reactions at the display electrode, especially in the erasure of the deposited species, when compared with the use of dihydrogen phosphate alone.

However, in one particular aspect, systems including phosphate, phosphite and hypophosphite anions fall short of the performance of those having bromide anions. A measure of the speed at which a display can be generated (written) is the "take-off time" of a given electrochromic system. Take-off time is the time period after which, for a given current density at the display electrode and a given bulk concentration of electrochromic material in the electrolyte, undesirable electrochemical reactions occur. A long take-off time is desirable, for it enables more material to be deposited in a single operation. A long take-off time for a given current density also implies that there is opportunity to shorten the writing time by increasing the current density even though this shortens the take-off time. Take-off time is observed by noting the time at which the potential across the display electrode/solution interface rises sharply away from the potential associated with deposition of the viologen cation radical. For the purposes of this specification, we define take-off time as the length of the interval between application of current to the display electrode and the observation of this potential rise. Take-off time is closely related to but is not necessarily the same as the classical electrochemical "transition time" which, in the case of viologen, would correspond to the complete depletion of $V^{++}$ ions at the cathode surface and to the onset of the further reduction $V^{+\cdot} + e \rightarrow V^\circ$ in the material already deposited. Take-off time is a somewhat more general term in that it relates to the observed potential rise irrespective of its cause. The take-off times for electrochromic materials including hypophosphite, phosphite or phosphate anions fall significantly short of the take-off times of systems including bromide anions. We have found that modifying the surface of the display electrode in contact with the electrolyte can lead to improvements in take-off times providing the display is operated at a sufficiently high current density.

According to the invention, there is provided a method of operating an electrochromic display device having one or more display electrodes each with a rough surface to increase the surface area thereof in comparison with its base area, the electrochromic effect being produced by the reversible reduction/oxidation of an electrochromic material, present in solution at said display electrode surfaces, characterised in that there is supplied, to each display electrode at which the electrochromic effect is required, electric current of such density, related to the surface roughness of the electrodes, that the take-off time of the reduction/oxidation reaction is increased in comparison with that achievable with a smooth electrode having the same base area.

The invention also provides an electrochromic display device having a display electrode with a rough surface to increase the surface area thereof in comparison with its base area, an electrochromic material present in solution at the electrode, and means for passing a current of predetermined density through the solution and said display electrode to cause reversible reduction/oxidation of the electrochromic material at the display electrode, characterised in that the surface roughness of the display electrode is so related to the predetermined current density as to increase the take-off time of the reduction/oxidation reaction in comparison with that achievable with a smooth electrode having the same base area.

The invention will further be explained, by way of example, with reference to the accompanying drawings, in which:

Figure 1 is a diagram indicating take-off times for di-heptyl viologen solutions with different anions;

Figure 2 is a model representation of a portion of the rough electrode surface of an electrochromic display device according to the invention and of concentration boundaries within the electrolyte under different conditions;

Figure 3 is a graph on a logarithmic scale indicating the effect on take-off time of differing roughnesses of the display electrode surface at various current densities.

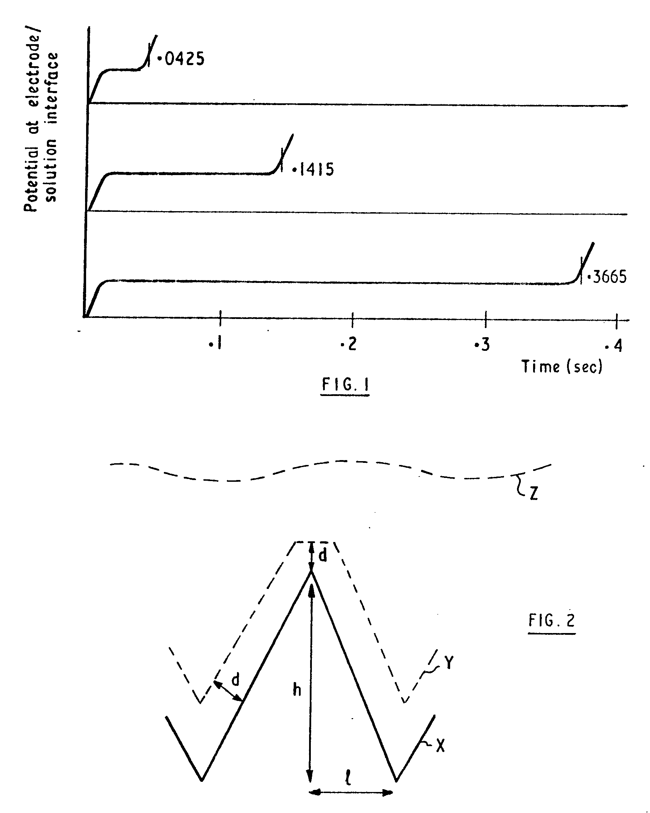

In an electrochromic display device of the kind being considered in connection with Figures 1 to 3, the display effect is achieved by the reduction of an ionic electrochromic species, such as the viologen dication, to the coloured form at the display electrode and the deposition of the coloured species on the electrode, or, more generally, on display electrodes selected from an array of display electrodes. Usually the array of display electrodes consists of rows and columns of dot shaped electrodes and the display is built up by colouring selected dots. The effectiveness of a display to the viewer resides in the contrast presented to the eye between the coloured and uncoloured electrodes.

Contrast is most readily achieved by depositing sufficient coloured material on the selected electrodes that colour saturation occurs. Clearly, it is desirable that this be done as rapidly as possible in order that a display can be changed by the user without undue delay. However, the amount of current which can usefully be supplied to the display electrodes is limited by electrochemical considerations, in particular, the speed at which ions can be supplied from the electrolyte to combine with the electrons supplied at the display electrode. For a current density $i$, the time interval $t$ during which coloured species can be reversibly deposited on the display electrode is normally given by an equation:

$$t = K/i^2 \qquad (1)$$

where K is nominally a constant term as fully defined in equation (4) below and comprises such parameters as the bulk concentration C of electrochromic material in the electrolyte and the diffusion coefficient D of the material both of which are constant for a given embodiment. Time $t$ is the transition time of the system. For the purposes of the subsequent discussion it will be considered to be the same as the take-off time.

Di-heptyl viologen dibromide obeys the equation (1) although for solutions containing hypophosphite and/or dihydrogen phosphate, it has been found that the product $i^2t$ is not always independent of current even for smooth electrodes. As shown in Figure 1, it has also been found that the take-off times of such solutions are substantially shorter than those of di-heptyl viologen dibromide.

Figure 1 shows typical take-off times with smooth display electrodes. For clarity, the three graphs have not been superimposed, but have been placed one above the other. In all three cases, a solution of 0.1 M di-heptyl viologen was used and $i$ was 20 mA/cm$^2$. The bottom graph shows that when 0.5 M Br$^-$ was present in the solution, take-off time was .366 seconds. When 0.2 M of dihydrogen phosphate, and 2.6 M of hypophosphite replaced the bromide, take-off time dropped to .141 seconds. The top graph shows that 0.2 M of dihydrogen phosphate with 1.0 M of hypophosphite gave take-off time of only .042 seconds.

It has been found that a roughened display electrode surface in contact with the electrolyte improves the take-off times when dihydrogen phosphate and/or hypophosphite anions are used with di-heptyl viologen cations provided that the current density is sufficiently high. Our studies have shown that application of the invention extends beyond the use of these materials.

The roughening of display electrodes has been proposed, in the past, for purely optical reasons and a method of roughening electrodes for this purpose is described in our GB patent specification no 1522049.

The property of a rough electrode which is important from an electrochemical aspect is the fact that the superficial area of the rough electrode is substantially increased relative to that of a smooth electrode. Consequently, the current density at the electrode surface for a given current applied to the electrode should be proportionally reduced which should lead to an increase of take-off time. However, for reasons to be explained, this is not always the case and one other parameter must be taken into account for the advantage to be realised.

The active electrochromic material or species is held in solution in the electrolyte at a bulk concentration C. The passage of a current through the electrolyte so as to electro-reduce the electroactive species at the electrode produces a region between the bulk of the electrolyte and the surface of the electrode in which there is a concentration gradient of the species. The depth of this region is known as the diffusion depth, d, and is dependent on the diffusion constant D, of the active electrochromic material and the time, t, for which current has been passed. For a given time, t:

$$d^2 = \pi\, Dt$$

Considering the situation at take-off time, $t$, which is inversely proportional to the square of current density (equation (1) above), it can be seen that diffusion depth at take-off time is inversely proportional to current density.

Thus, if current density is low, diffusion depth at take-off time is large and vice versa. The effect of different take-off time diffusion depths with a rough electrode surface is illustrated in Figure 2 in which for modelling purposes a rough surface is assumed to comprise contiguous pyramids of height, h, on square bases of side length 2l. The electrode surface is represented by the thick line X. At higher current densities the diffusion depth follows the profile of the electrode surface right up to take-off time $t$, and defines a surface as shown at Y. At a lower current density the take-off time and, consequently, the diffusion depth at take-off time are both increased and the diffusion depth defines a surface represented by the dotted line Z.

It can intuitively be seen that, for low current densities the boundary of the diffusion region (the bulk concentration interface) gradually smoothes out until it is approximately planar. Once this state is reached, the roughness of the electrode surface is immaterial and, electrochemically, the system behaves as through it were smooth in that electroactive species are only available for reduction at an interface whose area approximates to the base area of the electrodes. In this situation, for equal base current densities, the electroactive species cannot be reduced any faster at a rough electrode than at a smooth one. Thus, in the case of a precipitated electrochromic substance such as di-heptyl viologen, equal quantities per unit base area of the electrodes will be deposited irrespective of whether they are rough or smooth.

The ideal situation is represented by the dotted line Y, where the bulk concentration boundary follows closely the contours of the rough electrode. In this situation the area of the bulk concentration interface interacting with the electrode is maximised so that the availability of the electroactive species for reduction at the electrode is as great as possible. In this situation, for the same base current densities, more viologen will be deposited in unit time on a rough electrode than on a smooth electrode of the same base area. Thus, the benefit of the invention is only achieved in an electrochromic display device of given solution bulk concentration and diffusion coefficient if both the roughness of the electrode and the base current density are chosen such that the situation represented by the dotted line Y occurs.

An estimate of the degree of roughness required for a given active electrochromic material and current density can be derived from a more detailed consideration of Figure 2 and particularly the surface Y thereof. This estimate depends on the assumption that the surface Y is, like the underlying electrode surface X, comprised of contiguous pyramids but that the pyramids of surface Y are truncated at a distance d from the apexes of the pyramids of surface X so that Y is substantially at distance d from X at all points. The proportional increase in area of the bulk concentration interface Y (Figure 2) relative to the base area of the pyramids, i.e. relative to the area of the surface of a smooth electrode is given by:

$$A = (1 + (h/l)^2)^{1/2} - (d/h)^2((1 + (h/l)^2)^{1/2} - 1)^3 \qquad (2)$$

for $d/h \le 1/((1 + (h/l)^2)^{1/2} - 1)$

For other values of $d/h$, $A = 1$, corresponding to the interface Z of Figure 2.

For a given take-off time, $t$, the diffusion depth $d$ at take-off time is given by:

$$d^2 = \pi\, Dt \qquad (3)$$

where D is the diffusion coefficient of the electrochromic material (Ref "Electrochemical Science" by Bockris and Drazic (London 1972), page 133).

The total base current density (ie the total current divided by the base area of the electrodes is:

$$i = A\,.\,(FC/2)\,(\pi\, D/t)^{1/2} \qquad (4)$$

where F is Faraday's constant and C is bulk concentration (Ref "Electrochemical Kinetics" by K J Vetter (Academic Press 1967) page 207).

The factor A, as derived above, represents the proportion by which the surface area of the surface Y is greater than that of the base area of the rough electrode X. For the situation at take-off time $t$, equations (2) and (3) give expressions for both A and $t$ in terms of $d$ which can be substituted into equation (4) to give an expression for base current density $i$ in terms of $d$. Also by cross multiplication of equation (4) and substitution for $A$, an expression for the quantity $i^2t$ can also be derived in terms of $d$.

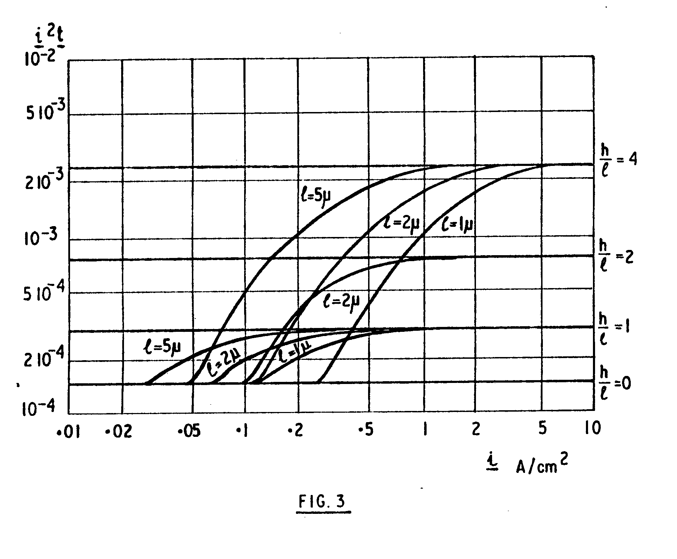

By computing values for $i^2t$ and $i$ for a range of values of $d$ for a 0.1 molar diheptyl viologen solution and assuming $D = 2.10^{-6}$ cm²/sec, the relationship between $i^2t$ and $i$ for surfaces of given geometry can be derived. The curves of Figure 3 illustrate this relationship for a number of different surfaces as defined by the ratio h/l and the periodicity of the roughness 2l.

The quantity $i^2t$ would be a constant value indicated by the heavy horizontal lines of Figure 3 if the factor A were simply the ratio of the area of surface X to its base area (ie the roughness factor of the surface). However, because the value of A is a function of diffusion depth $d$ at which depends on base current density $i$, the quantity $i^2t$ is observed to rise from an initial low value asymptotically towards the horizontal line value with increasing base current density.

Thus, it can be seen that the potential amplification in take-off time offered by the increased area of a rough surface is only attainable at sufficiently high base current densities. The amplification of take-off time at a given base current density $i$ and specified surface geometry (h/l and l) is given by the ratio of the value of $i^2t$ from the appropriate curve to the smooth surface value of $i^2t$, which is, of course, the horizontal line for h/l = 0.

It can also be seen from Figure 3 that the potential amplification of take-off time is determined by h/l. The values of h/l for the three examples of rough surface considered range from 1 to 4. The base current density at which substantial amplification is achieved, however, is determined by the periodicity 2l of the protuberances.

If, for example, it is required to apply a current of density about 0.5 A/cm², and h/l = 4 (approximately equal to the roughness factor) then 2l should be greater than 8 $\mu$m and should certainly be greater than 4 $\mu$m to maximise the take-off time.

The above discussion is based entirely on calculations which assume a rough surface of the form shown in Figure 2. It would be difficult to produce a regular surface and certain features such as the sharp peaks of surface X would be undesirable because the well known increase of current densities at sharp edges would cause the electrochemical reactions to be concentrated at those points.

One practical method of achieving roughness is to employ the method disclosed in our GB patent specification no 1522049 in which an aluminium surface is oxidised, the oxide is removed and then the exposed rough surface is thinly coated with silver. The final coating with silver besides providing a highly desirable electrolyte/electrode interface also serves the purpose of smoothing the peaks left by the roughening.

Any other suitable roughening procedure can be used. The surface of the electrode should preferably be of silver, although gold or platinum are suitable alternatives. Viologen, being surface active, may enhance any corrosive effect of the anions in use, and the use of metals likely to be attacked by the electrolyte should, of course, be avoided.

The preferred method involves the pulse plating of silver. We have found that satisfactory display electrodes can be plated from an aqueous solution of Silver Thiocyanate 32 g/litre, and Sodium Thiocyanate 200 g/litre. The solution was filtered to remove the minute black particles formed during its make-up. The pH of the solution was 5.4 at 20°C. A suitable rough plated surface was formed by supplying a current density of 5 ma/cm² by a pulse train of pulse width 0.3 msecs at repetition frequency 1 msec. It was found that the roughness of the surface as measured by the average peak-to-peak distance (2l) was dependent on the temperature of the solution. If solution temperature is above 28°C the deposit begins to show darker, an undesirable feature. But in the range 20 to 26°C is was found that the roughness of the surface progressively increased. Variations of pulse width and repetition frequency at constant solution temperature produced no significant variation in the surface roughness.

Electrical circuitry for controlling a display device according to the invention is described in our British Patent Specification 1513999.

Although the invention has been described in terms of viologen electrochromic materials, it is quite clear that it is applicable to any electrochromic display device which operates by the reduction or oxidation at display electrodes of an electrochromic species, present in solution.

## Claims

1. A method of operating an electrochromic display device having one or more display electrodes each with a rough surface to increase the surface area thereof in comparison with its base area, the electrochromic effect being produced by the reversible reduction/oxidation of an electrochromic material, present in solution at said display electrode surfaces, characterised in that there is supplied, to each display electrode at which the electrochromic effect is required, electric current of such density, related to the surface roughness of the electrodes, that the take-off time of the reduction/oxidation reaction, being the time after which the potential at the display electrode/solution interface rises from that characteristic of the reduction/oxidation reaction, is increased in comparison with that achievable with a smooth electrode having the same base area.

2. A method of operating an electrochromic display device as claimed in claim 1 in which the surface roughness of the display electrodes has an average periodicity greater than 4 microns, the roughness factor of the surface, being the ratio of the actual surface area of the display electrodes to their base area, is approximately 4, the electrochromic material comprises di-heptyl viologen cations in 0.1 molar solution and the current density of the supplied current is 0.5 Acm$^{-2}$.

3. An electrochromic display device having a display electrode with a rough surface to increase the surface area thereof in comparison with its base area, an electrochromic material present in solution at the electrode, and means for passing a current of predetermined density through the solution and said display electrode to cause reversible reduction/oxidation of the electrochromic material at the display electrode, characterised in that the surface roughness of the display electrode is so related to the predetermined current density as to increase the take-off time of the reduction/oxidation reaction, being the time after which the potential at the display electrode/solution interface rises from that characteristic of the reduction/oxidation reaction, in comparison with that achievable with a smooth electrode having the same base area.

4. An electrochromic display device as claimed in claim 3 in which the electrochromic material is an ionic compound comprising di-heptyl viologen cations and dihydrogen phosphate anions.

5. An electrochromic display device as claimed in claim 3 in which the electrochromic material is an ionic compound comprising di-heptyl viologen cations and hypophosphite anions.

6. An electrochromic display device as claimed in claim 3 in which the electrochromic material is a mixture of an ionic compound comprising di-heptyl viologen cations and hypophosphite anions and an ionic compound comprising di-heptyl viologen cations and dihydrogen phosphate anions.

7. An electrochromic display device as claimed in claim 3 in which the electrochromic material is an ionic compound comprising di-heptyl viologen cations in 0.1 molar bulk concentration, in which the current passing means is arranged to pass current at a density of 0.5 Acm$^{-2}$ and in which the roughness factor of the surface, being the ratio of the actual surface area of the display electrode to its base area is approximately 4 and the average periodicity of the rough surface is greater than 4 $\mu$m.

8. An electrochromic display device as claimed in claim 3 in which the rough surface of the display electrode is silver and the electrode is formed by pulse electroplating from an aqueous solution containing silver thiocyanate.

## Revendications

1. Une méthode de fonctionnement d'un dispositif d'affichage électrochromique comportant une ou plusieurs électrodes d'affichage présentant chacune une face rugueuse pour accroître la surface de celle-ci par rapport à la surface de leur base, l'effet électrochromique étant produit par l'oxydo-réduction réversible d'un matériau électrochromique présent en solution auxdites faces des électrodes d'affichage, caractérisée en ce qu'on applique à chaque électrode d'affichage où l'effet électrochromique est requis, un courant électrique d'une densité en rapport avec la rugosité de la face des électrodes telle que le temps d'envol de la réaction d'oxydo-réduction, qui est le temps après lequel le potentiel à l'interface électrode d'affichage/solution croît à partir de celui caractérisant la réaction d'oxydo-réduction, est accru par comparaison avec celui obtenu avec une électrode plane ayant la même base.

2. Une méthode de fonctionnement d'un dispositif d'affichage électrochromique selon la revendication 1 dans lequel la rugosité de la face des électrodes d'affichage présente une périodicité moyenne supérieure à 4 microns, le coefficient rugosité de la face qui est le rapport entre la surface réelle des électrodes d'affichage et leur base est d'approximativement 4, le matériau électrochromique comprend des cations de di-heptyl viologène en solution 0,1 molaire et la densité du courant appliqué est de 0,5 Acm$^{-2}$.

3. Un dispositif d'affichage électrochromique comprenant une électrode d'affichage avec une face rugueuse pour accroître la surface de celle-ci par rapport à sa base, un matériau électrochromique présent en solution à l'électrode, et des moyens pour faire passer un courant d'une densité prédéterminée au travers de la solution et de ladite électrode d'affichage pour provoquer l'oxydoréduction réversible du matériau électrochromique à l'électrode d'affichage, caractérisé en ce que la rugosité de la face de l'électrode d'affichage est dans un rapport tel avec la densité de courant prédéterminée qu'elle permet d'accroître le temps d'envol de la réaction d'oxydo-réduction qui est le temps après lequel le potentiel à l'interface électrode d'affichage/solution croît à partir de celui caractérisant la réaction d'oxydo-réduction, par comparaison avec celui obtenu avec une électrode plane ayant la même base.

4. Un dispositif d'affichage électrochromique selon la revendication 3 dans lequel le matériau électrochromique est un composé ionique comprenent des cations de di-heptyl viologène et des anions de phosphate dihydrogène.

5. Un dispositif d'affichage électrochromique selon la revendication 3 dans lequel le matériau électrochromique est un composé ionique comprenant des cations de di-heptyl viologène et des anions d'hypophosphite.

6. Un dispositif d'affichage électrochromique selon la revendication 3 dans lequel le matériau électrochromique est un mélange d'un composé ionique comprenant des cations de di-heptyl viologène et des anions d'hypophosphite et d'un composé ionique comprenant des cations de di-heptyl viologène et des anions de phosphate dihydrogène.

7. Un dispositif d'affichage électrochromique selon la revendication 3 dans lequel le matériau électrochromique est un composé ionique comprenant des cations de di-heptyl viologène en concentration globale de 0,1 molaire, dans lequel le moyen de passage du courant est agencé pour passer du courant à une densité de 0,5 Acm$^{-2}$ et dans lequel le coefficient de rugosité de la face qui est le rapport existant entre la surface réelle de l'électrode d'affichage et sa surface de base, est d'approximativement 4 et la périodicité moyenne de la surface rugueuse excède 4 microns.

8. Un dispositif d'affichage électrochromique selon la revendication 3 dans lequel le face rugueuse de l'électrode d'affichage est en argent et l'électrode formée par plaquage électrolytique pulsé à partir d'une solution aqueuse contenant du thiocyanate d'argent.

**Patentansprüche**

1. Verfahren zum Betrieb einer eine oder mehrere Anzeigeelektroden mit jeweils zur Vergrößerung ihrer wirksamen Oberfläche gegenüber ihrer Grundfläche aufgerauhten Oberflächen enthaltenden elektrochromen Anzeigeeinheit, bei der der elektrochrome Effekt durch reversible Reduktion/Oxidation einer in Lösung bei besagten Anzeigeelektroden-Oberflächen auftretenden elektrochromen Substanz hervorgerufen wird, dadurch gekennzeichnet, daß jeder Anzeigeelektrode, für die der elektrochrome Effekt erfordert wird, elektrischer Strom in derartiger, auf die aufgerauhte Elektrodenoberfläche bezogener Dichte zugeführt wird, daß die Ablaufzeit der Reduktions/Oxidations-Reaktion, nämlich die Zeit, nach der das Potential an der Grenzfläche zwischen Anzeigeelektrode und Lösung gegenüber dem für die Reduktions/Oxidations-Reaktion charakteristischen Potential ansteigt, im Vergleich zu der mit einer glatten Elektrode der gleichen Grundfläche zu erzielenden Ablaufzeit erhöht wird.

2. Verfahren zum Betreiben einer elektrochromen Anzeigeeinheit nach Anspruch 1, dadurch gekennzeichnet, daß die Oberflächenrauhigkeit der Anzeigeelektroden eine mittlere räumliche Periodizität von mehr als 4 $\mu$m aufweist, daß der Rauhigkeitsfaktor der Oberfläche, nämlich das Verhältnis des wirksamen Oberflächenbereichs der Anzeigeelektroden zu ihrer Grundfläche angenähert 4 ist, daß die elektrochrome Substanz Diheptyl-Viologen-Kationen in 0,1 molarer Lösung enthält und daß die durch den zugeführten Strom hervorgerufene Stromdichte 0,5 Acm$^{-2}$ beträgt.

3. Elektrochrome Anzeigeeinheit mit einer Anzeigeelektrode, die zwecks Vergrößerns ihrer wirksamen Oberfläche in Vergleich zu ihrer Grundfläche eine aufgerauhte Oberfläche, eine in Lösung vorliegende elektrochrome Substanz an der Elektrode und Maßnahmen aufweist, die einen Strom vorgegebener Dichte durch die Lösung und über besagte Anzeigeelektrode leiten, um reversible Reduktion/Oxidation der elektrochromen Substanz an der Anzeigeelektrode herbeizuführen, dadurch gekennzeichnet, daß die Oberflächenrauhigkeit der Anzeigeelektrode derart zur vorgegebenen Stromdichte in Beziehung steht, daß die Ablaufzeit der Reduktions/Oxidations-Reaktion, nämlich die Zeit, nach der das Potential an der Grenzfläche zwischen Anzeigeelektrode und Lösung gegenüber dem für die Reduktions/Oxidations-Reaktion charakteristischen Potential ansteigt, im Vergleich zu der mit einer glatten Elektrode gleicher Grundfläche zu erzielenden Ablaufzeit erhöt wird.

4. Elektrochrome Anzeigeeinheit nach Anspruch 3, dadurch gekennzeichnet, daß die elektrochrome Substanz eine ionische Verbindung, enthaltend Diheptyl-Viologen-Kationen und Dihydrogenphosphat-Anionen, darstellt.

5. Elektrochrome Anzeigeeinheit nach Anspruch 3, dadurch gekennzeichnet, daß die elektrochrome Substanz eine ionische Verbindung, enthaltend Diheptyl-Viologen-Kationen und Hypophosphit-Anionen, darstellt.

6. Elektrochrome Anzeigeeinheit nach Anspruch 3, dadurch gekennzeichnet, daß die elektrochrome Substanz eine Mischung aus einer ionischen Verbindung, enthaltend Diheptyl-Viologen-Kationen und Hypophosphit-Anionen, und einer ionischen Verbindung, enthaltend Diheptyl-Viologen-Kationen und Dihydrogenphosphat, darstellt.

7. Elektrochrome Anzeigeeinheit nach Anspruch 3, dadurch gekennzeichnet, daß die elektrochrome Substanz eine ionische Verbindung mit Diheptyl-Viologen-Kationen in 0,1 molarer Feststoffkonzentration darstellt, daß die stromleitenden Maßnahmen so ausgelegt sind, daß ein Strom mit einer Dichte von 0,5 Acm$^{-2}$ hervorgerufen wird, und daß der Rauhigkeitsfaktor der Oberfläche, nämlich das Verhältnis der wirksamen Oberfläche der Anzeigeelektrode zu ihrer Grundfläche, angenähert 4 ist, wobei die mittlere Periodizität der aufgerauhten Oberfläche größer als 4 $\mu$m ist.

8. Elektrochrome Anzeigeeinheit nach Anspruch 3, dadurch gekennzeichnet, daß die aufgerauhte Oberfläche der Anzeigeelektrode aus Silber besteht und die Elektrode ausgehend von einer Silberthiocyanat enthaltenden wässrigen Lösung durch gepulstes Galvanisieren bereitgestellt wird.

FIG. 1

FIG. 2

1

FIG. 3